# FASCICULE DE BREVET EUROPEEN

(11) **EP 1 440 788 B1**
(45) Date de publication et mention de la délivrance du brevet: **17.09.2008**
(21) Numéro de dépôt: 04290133.0
(22) Date de dépôt: 19.01.2004
(51) Int. Cl.: B29D 11/00, B29C 39/24, B29C 39/44

(54) **Procédé de moulage d'un élément optique en matière organique**
Verfahren zum Formen eines organischen optischen Elements
Method of molding an organic optical element

(30) Priorité: 24.01.2003 FR 0300802
(43) Date de publication de la demande: 28.07.2004
(73) Titulaire: ESSILOR INTERNATIONAL (Compagnie Générale d'Optique), F-94220 Charenton-le-Pont (FR)
(72) Inventeur: Huard, Marc, 94140 Alfortville (FR); Da Silva, Gracio, 77340 Pontault-Combault (FR); Darmes, Daniel, 77340 Pontault-Combault (FR)
(74) Mandataire: Santarelli

(56) Documents cités:
- EP-A- 0 799 690
- US-A- 3 904 078
- US-A- 4 190 621
- US-A- 5 514 311
- US-A- 5 536 456

## Description

La présente invention se rapporte de manière générale à la fabrication par moulage d'éléments optiques en matière organique, tels que des lentilles ophtalmiques correctrices et/ou solaires, des lentilles d'instruments ou des éléments d'optique de précision. Elle s'intéresse plus précisément au remplissage d'un moule avec la matière organique à l'état liquide.

Traditionnellement, le moulage d'un élément optique tel qu'une lentille ophtalmique se fait à l'aide d'un moule formé de deux coquilles de moulage à la périphérie desquelles est établi annulairement un élément de fermeture définissant avec elles la cavité de moulage recherchée. Après le remplissage de la cavité de moulage avec la matière à l'état liquide, l'initialisation de la polymérisation de cette matière est assurée par une source de chaleur ou de rayonnement.

Pour le remplissage du moule, la matière à mouler est introduite dans la cavité de moulage à la faveur d'une ouverture qui est dûment ménagée à cet effet à la périphérie des coquilles de moulage (en pratique, le plus souvent, dans l'élément de fermeture), de manière à ne pas interférer avec la zone optiquement utile de la lentille optique formée. Cette phase de remplissage s'opère au moyen d'un dispositif de remplissage apte à délivrer une dose déterminée de matière à mouler. Ce dispositif de remplissage comporte une buse d'introduction de la matière dans le moule, associée à l'ouverture de remplissage du moule. En amont de la buse, séparément ou d'un seul tenant avec celle-ci, est prévue une vanne dont la commande, de préférence automatisée, doit permettre un dosage précis de la quantité de matière délivrée au moule, à une cadence suffisante.

Typiquement, une séquence de remplissage de la cavité de moulage comporte les étapes suivantes :
- montée en débit par ouverture de la vanne, pour passer d'un débit nul à un débit nominal,
- remplissage plein débit, avec maintien du débit nominal,
- descente en débit par fermeture de la vanne, pour revenir du débit nominal au débit nul.

Une telle séquence de remplissage est connue du document JP-A-08244048, où les étapes de montée et de descente en débit sont formées chacune par un palier situé entre deux fronts verticaux.

En raison notamment des vitesses de remplissage résultant des cadences de productions imposées par les impératifs économiques, l'expérience montre que les lentilles optiques obtenues dans ces conditions sont fréquemment l'objet de défauts optiques locaux plus ou moins importants, conduisant à des taux de rebut relativement élevés et/ou à une qualité optique médiocre de l'élément optique ainsi formé. Pour éviter l'apparition de ces défauts, on peut certes imposer un remplissage très lent et/ou un temps de latence relativement important (de l'ordre d'une à deux heures) entre le remplissage et l'initialisation de la polymérisation ; mais bien entendu cette solution se heurte directement aux impératifs de cadences de production déjà évoqués. Plus efficacement, il a été proposé d'adopter, lors du remplissage une configuration particulière du moule, lequel est disposé verticalement, avec son ouverture de remplissage située en partie basse. Toutefois, même avec une telle configuration de remplissage, des défauts peuvent subsister selon la matière utilisée et surtout les cadences souhaitées.

Les efforts d'investigation de la demanderesse l'ont amenée, en particulier, à en rechercher une explication dans le procédé de remplissage lui-même.

Lors du remplissage en effet, la matière à mouler subit, au moins dans une certaine mesure, certaines perturbations d'écoulement qui, eu égard à la vitesse de remplissage et à la viscosité de la matière à mouler, s'opposent à un écoulement laminaire et engendrent, sans que le processus soit bien maîtrisé, l'apparition de microbulles. En particulier, la partie de la cavité de moulage située autour de l'ouverture de remplissage présente des irrégularités, résultant notamment de la présence du nez de la buse de remplissage qui débouche à cet endroit dans le moule. Ces irrégularités de surface de la cavité de moulage risquent de créer des irrégularités d'écoulement engendrant l'apparition de microbulles. De plus, selon la manière dont le remplissage et sa commande sont effectués, la matière peut subir des irrégularités de débit, voire des à-coups. Eu égard, conjointement, au fait que cette matière à mouler est un mélange de constituants susceptibles de présenter des indices de réfraction et/ou des coefficients de viscosité différents, il peut en résulter, par cisaillage ou étirement, l'apparition de gradients d'indices locaux relativement importants, qui, si la polymérisation intervient trop rapidement après le remplissage, ne manquent pas de conduire à d'autres défauts optiques tels que l'effet de "sirop" bien connu des verriers. Dans ce contexte, le procédé de remplissage peut apparaître comme un facteur particulièrement sensible.

Partant de ce constat, l'invention propose un procédé de moulage comportant une étape de remplissage préservant l'intégrité optique de la matière à mouler lors de son écoulement, notamment en début de remplissage.

On prévoit donc selon l'invention un procédé de moulage d'un élément optique en matière organique, selon la revendication 1.

On commence ainsi, avec la phase de début de remplissage bas débit, à remplir lentement la cavité de moulage, de manière à "mouiller" avec la matière à mouler le fond du moule jusqu'à ce qu'un certain volume minimum de matière y soit introduit. Car c'est bien le début du remplissage du moule qui semble s'avérer le plus critique. Grâce à la lenteur de l'écoulement lors de ce début de remplissage, le faible volume de matière ainsi initialement introduit reste exempt de microbulles ou tout au moins, en cas d'apparition de quelques microbulles, libère celles-ci aisément du fait même de sa faible hauteur. Au-delà de la hauteur minimum de matière prévue, le remplissage peut être accéléré sans risque de turbulence, car d'une part le volume de matière déjà introduit exerce une fonction d'amortisseur fluide et d'autre part la vitesse de progression de la surface libre de la matière dans le moule est moindre à débit constant, la cavité de moulage s'élargissant.

On notera qu'il était déjà connu, dans le domaine technique voisin mais distinct du moulage par injection d'une matière thermoplastique, où se posent des problèmes différents de ceux exposés ci-dessus, de commander la vitesse de rotation de la vis d'entraînement de la matière à injecter selon une séquence de commande de vitesses présélectionnée et, une fois le moule rempli, de maintenir la matière thermoplastique sous pression suivant une séquence de commande de pressions prédéterminée, ainsi que décrit par exemple dans la demande de brevet américain 5,514,311. Ce document décrit une séquence de vitesses de rotation comportant les étapes suivantes :
- montée en vitesse pour passer d'une vitesse nulle à une vitesse nominale, cette montée en vitesse comportant une croissance de vitesse pour atteindre un premier pallier puis une deuxième croissance de vitesse pour atteindre le débit nominal ;
- maintien de la vitesse nominale ;
- descente en vitesse, pour revenir de la vitesse nominale à une vitesse nulle.
   Avantageusement pour la commodité du pilotage de la vanne, on peut prévoir qu'au cours de la phase de début de remplissage, le débit soit une fonction du temps non strictement croissante, présentant un palier. La phase de début de remplissage se décompose alors elle-même en deux phases :
   montée préliminaire en débit pour passer du débit nul au débit de début de remplissage,
   palier de début de remplissage bas débit, avec maintien du débit de début de remplissage.

   On peut au contraire prévoir qu'au cours de la phase de début de remplissage, le débit soit une fonction du temps strictement croissante. Le pilotage de la vanne devra dans ce cas être particulièrement soigné et précis.
   On peut avantageusement procéder de manière globalement symétrique pour la descente en débit. L'étape de descente en débit se décompose alors en au moins deux phases :
   descente principale en débit pour passer du débit nominal à un débit de fin
   de remplissage inférieur à 20 g/min,
- fin de remplissage bas débit à débit décroissant pour passer du débit de fin de remplissage au débit nul.

Selon une autre caractéristique avantageuse de l'invention, la matière est introduite dans la cavité de moulage par un orifice situé en partie basse de ladite cavité et la polymérisation de la matière est initiée immédiatement après le remplissage. On réduit ainsi les temps de cycles tout en préservant la qualité optique de la lentille moulée. De plus, il est alors particulièrement avantageux de combiner ce mode de remplissage par le bas avec l'initialisation du remplissage à un débit de début de remplissage sensiblement inférieur au débit nominal. Cette phase d'initialisation du remplissage permet en effet de "mouiller" en douceur la partie basse de la cavité de mouillage qui est précisément celle dans laquelle se trouve l'ouverture de remplissage et en particulier le nez de la buse de remplissage.

Il sera fait référence aux dessins en annexe, parmi lesquels :
- la figure 1 est une vue en perspective d'un dispositif de moulage d'une lentille ophtalmique intégrant une vanne conçue pour la mise en oeuvre du procédé selon l'invention ;
- la figure 2 est une vue en coupe axiale du dispositif de la figure 1 ;
- la figure 3 est une vue de détail agrandie de la zone II de la figure 2 ;
- la figure 4 est une vue analogue à la figure 3, illustrant la configuration de pleine ouverture de la vanne ;
- la figure 5 est une vue analogue à la figure 3, illustrant la configuration de fermeture de la vanne ;
- la figure 6 est un graphe représentant la fonction de correspondance entre la position axiale du pointeau de la vanne et le débit délivré par la vanne dans des conditions spécifiques ;
- la figure 7 est un graphe représentant un exemple de séquence de remplissage du moule, conforme au procédé selon l'invention ;
- la figure 8 est un graphe analogue à celui de la figure 7 représentant un autre exemple de séquence de remplissage du moule, conforme au procédé selon l'invention.

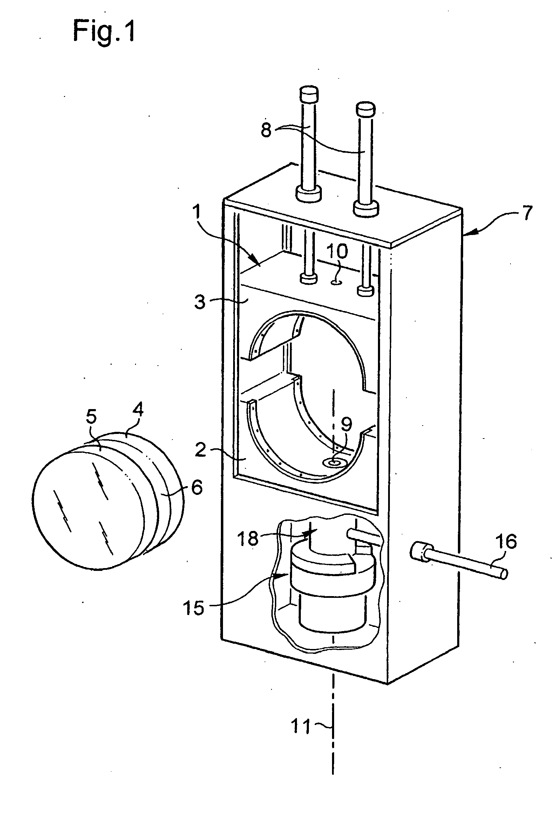

La figure 1 représente un dispositif de moulage d'un élément optique en matière synthétique tel qu'une lentille ophtalmique destinée à équiper une paire de lunettes correctrices ou solaires. Ce dispositif de moulage se compose globalement de deux parties : un moule 1 renfermant la cavité de moulage définissant la lentille à mouler et un dispositif de remplissage 15.

Le moule 1 ne relève pas dans ses détails de la présente invention et il ne sera donc que sommairement décrit. On pourra d'ailleurs, dans le cadre de la présente invention, utiliser n'importe quelle sorte de moule, avec le procédé de moulage correspondant. On pourra ainsi, par exemple, utiliser des moules et procédé du type de ceux décrits dans les documents EP 0715946, US 4190621 et US 5110514.

Dans l'exemple illustré, le moule 1 est du type décrit dans le document EP 0715946. Il comporte deux mors 2, 3 présentant chacun une surface intérieure hémicylindrique complémentaire de l'autre et enserrant deux coquilles de moulage 4, 5 disposées de chant, suivant un plan vertical. Les deux coquilles 4, 5 définissent entre elles la cavité de moulage 6 souhaitée. Les deux mors 2, 3 sont portés par un bâti 7 et le mors supérieur 3 est mobile en translation verticale sous la commande de vérins 8. Le mors inférieur 2 possède un orifice de coulée 9 situé à la partie basse de la cavité de moulage 6, et, préférentiellement, au point le plus bas de celle-ci. Autrement dit, en l'espèce, l'orifice de coulée 9 débouche sur la génératrice la plus basse de la surface intérieure du mors 2 ; il est agencé suivant un axe de coulée 11 vertical. Le mors supérieur 3 présente lui-même un évent 10 de même axe vertical 11 situé en partie haute et débouchant préférentiellement sur la génératrice la plus haute de la surface intérieure du mors 3.

En dessous du mors inférieur 2 est installé le dispositif de remplissage 15 de la cavité de moulage. Il s'agit globalement pour ce dispositif d'assurer le remplissage de la cavité de moulage avec la quantité souhaitée de matière synthétique, sans engendrer ni microbulles ni effet de sirop, en vue de l'obtention d'un élément moulé de bonne qualité optique.

Le dispositif de remplissage 15 est relié par un conduit 16 à des moyens d'alimentation (non représentés) aptes à assurer une alimentation continue de la cavité de moulage en matière à mouler. Par alimentation continue on entend ici une alimentation à pression sensiblement constante, dépourvue de tout à-coup. Ces moyens d'alimentation comportent par exemple une source de pression disposée en amont d'un réservoir qui, formant nourrice, contient la matière à mouler et qui, par le conduit 16, est relié au dispositif de remplissage. Par exemple, la source de pression est un réservoir d'air comprimé qui, sous le contrôle d'un régulateur, est relié au réservoir, au-dessus de la matière à mouler contenue dans celui-ci.

La matière à mouler peut, au choix, être une composition au moins en partie polymérisable par insolation, et, par exemple, par rayonnement ultraviolet, ou être une composition au moins en partie polymérisable à la chaleur, ou, encore, être une composition qui est à la fois polymérisable par insolation et polymérisable à la chaleur.

Le dispositif de remplissage 15 comporte deux composants principaux agencés suivant l'axe de coulée 11 : une buse 17 et une vanne à pointeau 18.

La buse 17 est globalement de révolution autour de l'axe de coulée 11 et est extérieurement étagée en trois tronçons, avec un plateau de fixation 19, un corps cylindrique ou parallélépipédique 20 reçu dans un logement correspondant du mors inférieur 4 du moule, et un embout 21 traversant un perçage correspondant du mors inférieur 4 pour déboucher en affleurement sur la face intérieure de ce mors. Intérieurement, la buse 17 comporte un canal intérieur traversant 22 d'axe 11 qui, à son extrémité supérieure, débouche dans la cavité de moulage 6 pour former l'orifice de coulée 9 mentionnée précédemment.

En dessous de la buse 17, c'est-à-dire en amont de celle-ci par référence au sens d'écoulement de la matière à mouler, est montée la vanne 18. Cette vanne comporte un corps 25 globalement de révolution autour de l'axe de coulée 11, pourvue d'une collerette supérieure de fixation 26 plaquée contre le plateau de fixation 19 de la buse 17 au moyen de vis 28 qui, traversant la collerette 26 et le plateau 19, sont engagées dans des taraudages correspondants du mors 4 pour fixer au mors 4 à la fois la buse 17 et le corps 25 de la vanne 18.

Un canal 30 d'écoulement de la matière à mouler est ménagé à l'intérieur du corps 25 de la vanne 18. Ce canal présente une ouverture d'entrée 31, une ouverture de sortie 32 et, entre ces deux ouvertures, un rétrécissement 33 bordé sur son flanc amont par un décrochement 34 formant siège comme cela sera mieux expliqué ultérieurement.

Le canal d'écoulement 30 présente ici une forme de L, ayant une première branche, verticale, de révolution autour de l'axe d'écoulement 11 et dont l'extrémité libre constitue l'ouverture de sortie 32, et une seconde branche, horizontale, de révolution autour d'un axe 35 perpendiculaire à l'axe d'écoulement 11. Cette seconde branche peut aussi ne pas être perpendiculaire à l'axe 11

La première branche du canal 30 est étagée, avec une base large 36 et, en extrémité, le rétrécissement 33 suivi de l'ouverture de sortie 32. La base 36 et le rétrécissement 33 sont cylindriques. Le rétrécissement 33 possède un diamètre égal à celui de l'ouverture de sortie 32 qui en forme par conséquent le prolongement. La transition entre la base large 36 et le rétrécissement 33 est réalisée par le décrochement 34 qui est de forme conique et qui se raccorde au rétrécissement 33 et à la base 36 par des zones de liaison émoussées, c'est-à-dire non anguleuses. Cette uniformité de section en aval du décrochement 34 et la douceur de la transition de diamètre résultant de la conicité du décrochement 34 et de l'absence de zone anguleuse permettent d'éviter ou tout au moins limiter pour leur plus grande part les turbulences d'écoulement. Pour le décrochement conique 34, on choisira de préférence un angle au sommet compris entre 30 et 60 degrés. Il n'est toutefois pas indispensable que le décrochement 34 soit rigoureusement conique. Il pourra même être intéressant de réaliser ce décrochement sous la forme d'une surface de révolution de section axiale courbée, par exemple proche d'une surface torique ou même plus complexe avec une section axiale ondulée pour un raccordement en douceur avec la base large 36 et le rétrécissement 33.

De même, en aval de l'ouverture de sortie 32, le canal intérieur 22 de la buse 17 est, au moins dans sa partie qui jouxte l'ouverture de sortie 32, de forme cylindrique de même diamètre que ladite ouverture de sortie 32. L'écoulement de la matière à mouler ne rencontre donc aucune irrégularité entre la vanne 18 et la buse 17.

La seconde branche du canal d'écoulement 30 se réduit quant à elle à l'ouverture d'entrée 31 qui débouche directement à la base de la première branche. En amont (par rapport au sens de l'écoulement), l'ouverture d'entrée 31 débouche dans un logement taraudé 37 destiné à recevoir un embout de raccordement fileté du conduit 16.

Dans l'exemple envisagé, les dimensions du canal d'écoulement 30 de la vanne 18 sont les suivantes :
- le diamètre de l'ouverture d'entrée 31 est de 5 mm ;
- le diamètre de la base 36 de la première branche du canal d'écoulement 30 est de 10 mm ;
- le diamètre commun, de l'ouverture de sortie 32 et du rétrécissement 33 (et du canal 22 de la buse 17) est de 5 mm ;
- l'angle au sommet du décrochement conique 34 est de 45 degrés.

Ces dimensions sont données à 20% près.

La vanne 18 comporte par ailleurs un pointeau 40 monté dans le corps 25 pour être mobile entre une position de pleine ouverture autorisant un débit maximum et une position de fermeture obturant le canal d'écoulement 30, avec, entre ces deux position extrêmes, une plage de positions intermédiaires sur laquelle le débit autorisé par la vanne 18 varie.

Ce pointeau 40 présente un axe de symétrie de révolution et est monté dans le corps 25 pour coulisser suivant son axe qui se confond avec l'axe d'écoulement 11. Plus précisément, le pointeau 40 comporte une embase allongée 41 de surface extérieure cylindrique d'axe 11 et un nez 42 allongé suivant l'axe 11, exerçant, en coopération avec le rétrécissement 33 du canal d'écoulement 30, une fonction de réglage de débit et présentant à cet effet une section non uniforme sur toute sa longueur, comme cela sera mieux expliqué ultérieurement.

L'embase allongée cylindrique 41 est reçue à coulissement dans un alésage traversant 45 ménagé dans le corps 25 suivant l'axe 11. Un joint torique d'étanchéité 44 en un élastomère du type Ethylène-Propylène-Diène est monté entre le corps 25 et l'embase cylindrique 41 du pointeau.

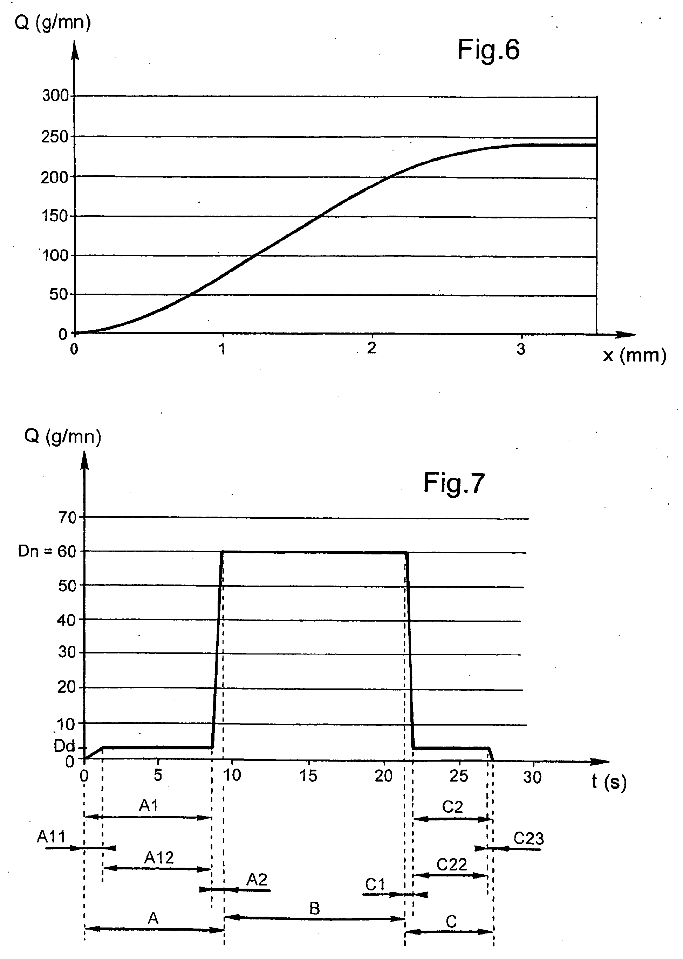

Dans l'exemple illustré aux figures 1 à 5, le nez 42 présente une surface extérieure conique permettant d'établir, à pression d'admission constante de la matière à mouler, une fonction de correspondance entre la position axiale du pointeau 40 et le débit délivré par la vanne 18. En effet, dans les positions intermédiaires du pointeau 40, le nez conique 42 du pointeau 41 est engagé dans le rétrécissement 33 du canal d'écoulement 30 et l'on comprend que, du degré d'enfoncement du nez 42 dans le rétrécissement 33, dépend la section d'écoulement laissée libre pour la matière à mouler entre ledit nez et le rétrécissement 33. Pour une pression d'admission donnée de la matière à mouler, le débit autorisé par la vanne 18 peut donc être réglé en ajustant la position du pointeau 40 le long de son axe 11. Un exemple de cette fonction de correspondance, pour une pression d'alimentation de 0,3 bar et une matière ayant une viscosité de 0,02 Pa.s (Pascal-seconde), soit 200 cps (centipoises), est donné à la figure 6 qui montre la courbe de débit de matière, notée Q et donnée en ordonnée en g/min, en fonction de la position axiale du pointeau 41, notée x et figurant en abscisse en mm. La position axiale du pointeau 41 est repérée à partir de sa position de fermeture, origine des abscisses, et s'étend jusqu'à sa position d'ouverture maximum qui est ici située à 3,5 mm de sa position de fermeture où le débit atteint près de 250 g/min.

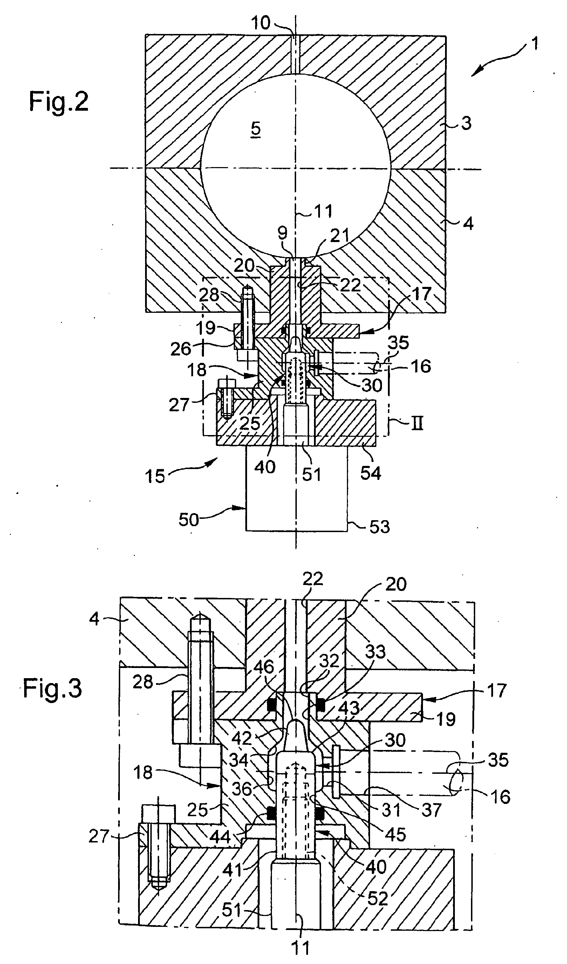

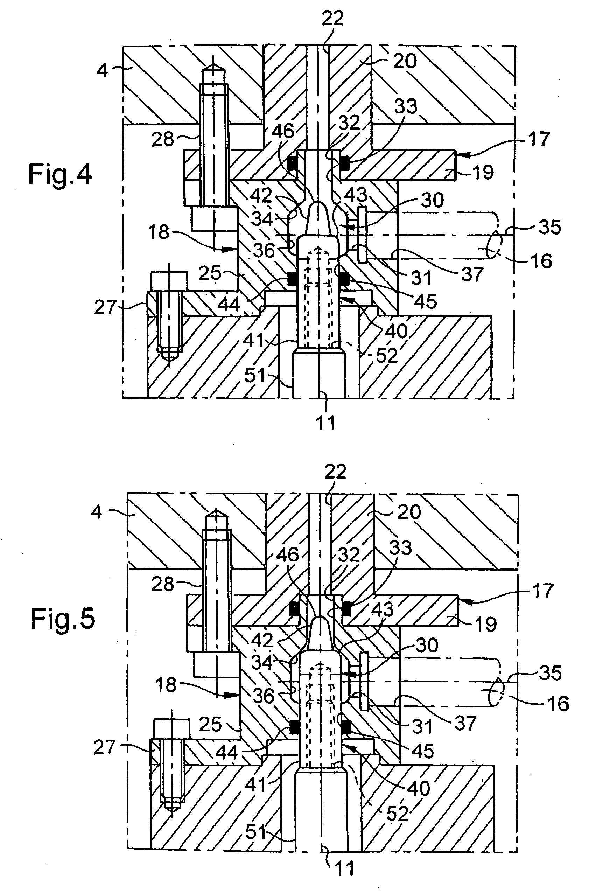

Par ailleurs, le nez 42 possède une extrémité libre 46 qui est émoussée et plus précisément, en l'espèce, sphérique. Cette configuration émoussée de l'extrémité du nez 42 permet d'éviter ou au moins limiter les turbulences lors de l'écoulement. En effet, comme on peut le constater aux figures 3 et 4, l'extrémité du nez 42 est, lors de l'écoulement en position d'ouverture partielle, engagée dans le rétrécissement 33. De même, en position d'ouverture maximum (figure 4) dans laquelle la vitesse d'écoulement est la plus élevée, l'extrémité 46 du nez 42 est au seuil ou même légèrement engagée dans le rétrécissement 33. Il est en effet avantageux de limiter la course du pointeau pour une meilleure réactivité et, surtout, réduire autant que possible les effets de pompage et de cisaillement exercés sur la matière par le pointeau lors de son déplacement.

Entre son nez 42 et son embase allongée 41, le pointeau 40 possède extérieurement un épaulement de fermeture 43 agencé pour prendre appui, en position de fermeture, contre le décrochement 34 de la première branche du canal d'écoulement 30. C'est ainsi que, dans sa fonction d'obturation du canal d'écoulement 30 qu'il exerce en coopération avec l'épaulement 43 du pointeau 40, le décrochement 34 forme un siège pour cet épaulement.

L'épaulement de fermeture 43 du pointeau est émoussé et présente plus précisément une forme torique.

Dans l'exemple envisagé, les dimensions extérieures du pointeau 40 sont les suivantes :
- le diamètre de l'embase allongée 41 est de 8 mm ;
- le nez conique 42 possède un angle au sommet de 12,4 degrés, avec, à sa jonction avec l'embase 41, un grand diamètre de 4,7 mm ;
- le rayon de l'extrémité libre 46 est de 2 mm ;
- le rayon de l'épaulement torique 43 est de 2 mm.

Ces dimensions sont données à 20% près.

Pour éviter les risques de "gommage", c'est-à-dire de grippage du pointeau dans l'alésage 45 du corps de vanne 25 suite à un dépôt de très fines couches de matière sur la surface du pointeau et/ou de l'alésage 45, les surfaces intérieures du canal d'écoulement 30 et de l'alésage 45 du corps et au moins la partie de la surface extérieure du pointeau 40 qui est amenée à être plongée dans le canal d'écoulement 30, au contact de la matière, sont en Polytetrafluoroéthylène. Dans l'exemple envisagé, le pointeau 40 est intégralement réalisé en Polytetrafluoroéthylène, tandis que le corps 25 est en métal revêtu intérieurement de Polytetrafluoroéthylène ou analogue (le choix du type de revêtement pour l'intérieur du corps de vanne dépendant du métal utilisé pour sa fabrication).

La position axiale du pointeau 40 est commandée par un vérin double effet 50 dont la tige mobile 51 d'axe 11 est pourvue à son extrémité libre d'une tige filetée 52 engagée dans un perçage taraudé axial de l'embase allongée 41 du pointeau 40. Le corps 53 du vérin 50 est fixé sur une entretoise 54 elle-même fixée sur la collerette de fixation 27 du corps 25 de la vanne 18. L'entretoise 54 est percée en son centre, suivant l'axe 11, pour permettre le passage libre de la tige 51 du vérin 50.

Le vérin 50 peut être du type à commande de position ou à commande de vitesse de translation de sa tige et, partant, du pointeau 40.

Dans l'exemple illustré par les figures 2 à 5, le vérin est du type à commande de position : il permet, à l'aide d'une unité de commande associée classique (non représentée), de contrôler avec précision la position linéaire de la tige 51 et du pointeau 40 le long de l'axe 11. Il s'agit typiquement d'un vérin à moteur pas à pas tel que celui commercialisé par la société TAA Magnetic sous la marque HSI® et portant la référence HSI 46441-05-M3. On utilisera ce type de vérin pour ses qualités de précision et de flexibilité, dans les cas de séquences de coulée complexes impliquant des variations du débit de matière entre plusieurs valeurs définies avec précision en fonction de paramètres ad hoc tels que le volume total à remplir ou la géométrie de la cavité à remplir.

En service, le moulage d'un élément optique en matière organique s'opère en introduisant dans la cavité de moulage 6 la matière à l'état liquide, puis en polymérisant cette matière dans la cavité de moulage 6. Après durcissement suffisant, la lentille est éjectée du moule.

Pour le remplissage du moule 1, la matière à mouler est introduite dans la cavité de moulage à la faveur de l'orifice de coulée 9, sous la commande de la vanne 15.

L'ouverture d'entrée 31 étant reliée par le conduit 16 à une source de matière à mouler sous pression constante, il suffit d'ouvrir plus ou moins la vanne 18 pour avoir le débit recherché pour la matière à mouler et assurer un remplissage progressif, par le bas, de la cavité de moulage 6 du moule 1.

Il suffit pour vaincre la gravité, de mettre en oeuvre des moyens d'alimentation propres à assurer la circulation de la matière à mouler sans cependant mettre réellement celle-ci sous pression.

La figure 7 illustre un premier exemple de séquence de remplissage du moule conforme à l'invention. Il s'agit du remplissage par le bas de la cavité de moulage en vue du moulage d'une lentille directement finie. Cette séquence est donnée pour une pression d'alimentation de 0,07 bar et une matière ayant une viscosité de 0,02 Pa.s (Pascal-seconde), soit 200 cps. Sur cette figure, on a représenté la fonction Q(t) donnant le débit de matière Q entrant dans la cavité de moulage, exprimé en grammes par minute, en fonction du temps t, exprimé en secondes. Pour le détail de la loi de variation du débit en fonction du temps Q(t), il est renvoyé à la figure 7.

Cette séquence de remplissage comporte trois étapes principales : une étape de montée en débit A, une étape de remplissage plein débit B et une étape de descente en débit C. Comme exposé en détail ci-dessous, l'étape de montée en débit A et l'étape de descente en débit C se divisent chacune en trois phases, tandis que l'étape de remplissage plein débit est à débit constant.

### Etape A : montée en débit.

La séquence de remplissage débute bien entendu par une montée en débit au cours de laquelle le débit de matière entrant dans la cavité de moulage passe globalement de zéro à un débit nominal prédéterminé Dn. En pratique, cette étape est réalisée par l'ouverture de la vanne, avec recul progressif du pointeau de sa position initiale de fermeture vers sa position d'ouverture. Cette ouverture qui engendre une montée en débit, délicate en ce qu'elle se révèle bien souvent à l'origine des défauts optiques précités, se divise en deux phases afin précisément d'éviter l'apparition de tels défauts : une phase de début de remplissage bas débit A1, et une phase de montée principale en débit A2. La phase de début de remplissage bas débit A1 est croissante, non strictement, avec un palier à débit constant. Elle se divise ainsi en deux sous-phases : une phase de montée préliminaire en débit A11 et une phase de palier de début de remplissage bas débit Al2. L'étape A de montée en débit comporte donc au total trois phases.

### Phase A11 : montée préliminaire en débit

On débute par la phase de montée préliminaire en débit notée A11 à la figure 7 au cours de laquelle le débit passe de sa valeur initiale nulle à une valeur prédéterminée relativement faible que nous appellerons débit de début de remplissage Dd.

Pour obtenir cette première montée en débit, on procède en pratique à une ouverture partielle de la vanne. Le pointeau 40 est tiré par la tige 51 du vérin 50 à partir de sa position initiale de fermeture dans laquelle l'épaulement 43 est en appui contre le décrochement 34 de la première branche du canal d'écoulement 30, jusqu'à une position voisine de relativement faible ouverture. Le remplissage débute dès que le pointeau quitte sa position de fermeture.

Dans l'exemple donné à la figure 7, le débit Dd est de 3 g/min et la phase de montée préliminaire en débit dure 1,2 s. En l'espèce, la courbe de débit au cours de cette phase est quasiment linéaire. La vitesse de montée en débit (dérivée première du débit par rapport au temps, correspondant à la pente de la courbe de débit) au cours de cette montée préliminaire en débit est donc de 15 g.min⁻². Cette montée préliminaire en débit n'est cependant pas nécessairement linéaire et d'autres allures de courbe de montée en débit pourront être prévues pour cette phase, avec notamment une continuité de débit au second ordre par rapport au temps en début et en fin de phase. De manière générale, quelle que soit l'allure de la courbe de montée préliminaire en débit, on pourra envisager des vitesses de montée en débit comprises entre 0 et 500 g.min⁻² et de préférence inférieures à 200 g.min⁻².

### Phase Al2 : palier de début de remplissage bas débit

Après la montée préliminaire en débit A11, le débit de matière atteint un palier, noté A12 à la figure 7, au cours duquel le débit est maintenu constant à sa valeur de débit de début de remplissage Dn pendant une durée prédéterminée de quelques secondes. A cet effet, le pointeau 40 de la vanne est maintenu immobile dans sa position de faible ouverture définissant le débit de début de remplissage Dd voulu.

Le débit Dd est très sensiblement inférieur au débit nominal Dn défini ci-dessous en liaison avec la phase de remplissage plein débit B. Pour éviter toute turbulence, le débit de début de remplissage Dd reste inférieur à 20 g/min. En pratique, ce débit de début de remplissage Dd pourra être compris entre 3 et 8 g/min. Dans l'exemple envisagé à la figure 7, il est de 3 g/min.

La durée de la phase de début de remplissage bas débit A1 dépend du débit Dd et du volume de matière que l'on souhaite ainsi introduire en douceur dans la cavité de moulage pour amorcer le remplissage. La phase de remplissage bas débit dure jusqu'à ce que la cavité de moulage du moule soit remplie à une hauteur prédéterminée, mesurée entre le point le plus profond de la cavité de moulage et la surface libre de la matière à mouler au droit de ce point. Cette hauteur dépend de chaque cas d'espèce et en particulier de la matière à mouler et de la configuration du moule. En tout état de cause, on a pu déterminer aux essais qu'une hauteur minimum de 2 mm est nécessaire.

En revanche, le remplissage bas débit entraînant une augmentation sensible de la durée globale de la séquence de remplissage, il est préférable de stopper le remplissage bas débit dès que possible. Il semble ainsi préférable que la hauteur de matière marquant la fin du début de remplissage bas débit reste inférieure à 12 mm. Dans la plupart des cas testés, une hauteur de matière comprise entre 5 et 10 mm apparaît comme un bon compromis. Dans le cas d'espèce présenté une hauteur de 7 mm a été retenue.

En pratique, dans le cas où la phase de remplissage bas débit A comporte un palier A12, comme dans l'exemple illustré par la figure 7, on pourra avantageusement prévoir une durée située entre 4 et 10 secondes. En l'espèce illustrée par la figure 7, la durée de la phase A12 est de 7 s.

On permet ainsi au remplissage de s'amorcer en douceur avec un écoulement de matière lent. Le faible volume de matière ainsi initialement introduit reste exempt de microbulles ou tout au moins, en cas d'apparition de quelques microbulles, libère celles-ci aisément du fait même de sa faible épaisseur. Comme la matière est introduite dans la cavité de moulage par un orifice situé en partie basse de ladite cavité, cette phase de début de remplissage lent permet de "mouiller" en douceur la partie basse de la cavité de mouillage qui est précisément celle dans laquelle se trouve l'ouverture de remplissage et en particulier le nez de la buse de remplissage. On évite aussi tout effet de jet (par analogie à un jet d'eau, toutes proportions gardées) qui résulterait d'un début de remplissage trop rapide et qui engendrerait inévitablement l'emprisonnement de bulles d'air dans la matière à mouler.

### Phase A2 : montée principale en débit

Lorsque le fond de la cavité de moulage est suffisamment rempli, on procède à une montée principale en débit, notée A2 à la figure 7. Cette seconde montée en débit est beaucoup plus forte que la première A11. Le débit passe en effet du débit de début de remplissage, qui doit rester faible pour les raisons évoquées ci-dessus, au débit nominal qui doit être aussi élevé que possible pour réduire les temps de cycle. Dans l'exemple donné à la figure 7, le débit nominal Dn est de 60 g/min. La durée de cette montée principale en débit est de 1 s et la courbe de débit au cours de cette phase est quasiment linéaire. La vitesse de montée en débit (dérivée première du débit par rapport au temps, correspondant à la pente de la courbe de débit, c'est-à-dire à l'accélération du débit) au cours de cette phase A2 est donc de 3000 g.min⁻² environ. Cette montée principale en débit n'est cependant pas nécessairement linéaire et d'autres allures de courbe de montée en débit pourront être prévues pour cette phase, avec notamment une continuité de débit au second ordre par rapport au temps en début et en fin de phase. De manière générale, quelle que soit l'allure de la courbe de montée principale en débit, on pourra envisager des vitesses de montée en débit comprises entre 2000 et 7000 g.min⁻², voire davantage.

En pratique, au cours de cette phase, le pointeau 40 est tiré par la tige 51 du vérin 50 jusqu'à sa position d'ouverture maximum. La section d'ouverture et donc le débit varient, tout au long de cette phase, suivant une loi définie par la variation de position linéaire du pointeau en relation avec la forme du profil du nez 42 du pointeau 40.

### Etape B : remplissage plein débit

Le débit nominal (maximum) étant ainsi atteint, le remplissage se poursuit à plein débit. C'est l'étape de remplissage à plein débit, notée B à la figure 7. Cette phase de remplissage rapide participe du soucis de réduire autant que possible les temps de cycle. Mais elle n'engendre pas pour autant de turbulences néfastes, dans la mesure où celles-ci sont évitées du fait de la présence dans le fond de la cavité de moulage du volume de matière liquide qui a été précautionneusement introduit lors de la phase de remplissage bas débit A12 et qui exerce désormais une fonction d'amortissement fluide. Le débit nominal ne doit cependant pas excéder une certaine limite, au-delà de laquelle l'amortissement fluide ne serait plus efficace et des risques de turbulence réapparaîtraient.

Un compromis doit donc être recherché pour ce débit nominal qui doit être aussi élevé que possible pour réduire les temps de cycle, sans pour autant engendrer des turbulence d'écoulement qui ne manqueraient pas d'affecter l'intégrité optique de la matière. On pourra ainsi prévoir un débit nominal Dn compris entre 50 et 300 g/min. Dans l'exemple illustré par la figure 7, le débit nominal Dn est de 60 g/min.

En pratique, au cours de cette étape, le pointeau 40 est maintenu immobile dans sa position d'ouverture maximum, dans laquelle l'extrémité 46 de son nez se trouve au seuil du rétrécissement 33. La section d'ouverture est alors quasiment définie par le rétrécissement 33 seul. La durée de cette phase, égale à la durée de stationnement du pointeau 40, est en l'espèce de 14 s.

### Etape C : descente en débit

En fin de remplissage, la vanne doit être refermée pour revenir du débit nominal au débit nul, autant que possible avec précision et toujours sans dégrader la matière. Cette descente en débit, comme la montée, se divise ici en trois phases : une phase de descente principale en débit C1, une phase de palier de fin de remplissage bas débit C22 et une phase de descente finale en débit C23.

### Phase C1 : descente principale en débit

On amorce la fermeture de la vanne par une première descente en débit, appelée descente principale et notée C1 à la figure 7, au cours de laquelle le débit redescend du débit nominal Dn à un débit de fin de remplissage Df prédéterminé. Dans l'exemple donné à la figure 7, le débit de fin de remplissage Df est de 3 g/min, si bien que le débit passe alors de 60 g/min à 3 g/min. En l'espèce, la durée de cette descente principale en débit est de 1 s et la courbe de débit au cours de cette phase est quasiment linéaire. La vitesse de descente en débit (dérivée première du débit par rapport au temps, correspondant à la pente de la courbe de débit) au cours de cette phase est donc de 3000 g.min⁻². De manière générale, quelle que soit l'allure de la courbe de descente principale en débit, on pourra envisager des vitesses de descente en débit comprises entre 2000 et 7000 g.min⁻².

En pratique, au cours de cette phase, le pointeau 40 est tiré par la tige 51 du vérin 50, à partir de sa position de pleine ouverture en direction de sa position de fermeture, jusqu'à une position d'ouverture partielle correspondant au débit de fin de remplissage Df voulu. La section d'ouverture et donc le débit varient, tout au long de cette phase, suivant une loi définie par la variation de position linéaire du pointeau en relation avec la forme du profil du nez 42 du pointeau 40.

### Phase C22 : palier de fin de remplissage bas débit

Le débit de matière atteint ensuite un palier avec la phase de fin de remplissage bas débit, notée C22 à la figure 7, au cours de laquelle le débit de fin de remplissage Df est maintenu constant pendant une durée prédéterminée de quelques secondes. On permet ainsi à l'air restant dans le haut du moule en fin de remplissage de s'évacuer complètement. On peut en outre de la sorte obtenir une fermeture précise et propre, sans débordement.

A cet effet, le pointeau 40 de la vanne est maintenu immobile dans sa position de faible ouverture définissant le débit de fin de remplissage. La section d'ouverture est alors constante.

Le débit de fin de remplissage Df est très sensiblement inférieur au débit nominal Dn. Pour éviter toute turbulence ou emprisonnement d'air, il est préférable que le débit de fin de remplissage Df reste inférieur à 20 g/min. En pratique, ce débit de fin de remplissage Df pourra être compris entre 3 et 8 g/min. Dans l'exemple envisagé à la figure 7, il est de 3 g/min.

La phase de fin de remplissage bas débit est de préférence plus longue que la phase de descente principale en débit C1 définie ci-dessous. En pratique on pourra avantageusement prévoir une durée située entre 2 et 8 secondes. Dans l'exemple illustré par la figure 7, la phase C22 dure 5 s.

### Phase C23 : descente finale en débit

Enfin, le remplissage est stoppé par la fermeture complète de la vanne qui permet passer du débit de fin de remplissage Df au débit nul. C'est la seconde descente en débit ou descente finale. L'épaulement 43 du pointeau 40 est repoussé par la tige du vérin en position de fermeture complète, en butée contre le décrochement 34.

La fermeture de la vanne marque la fin de la séquence de remplissage.

L'initialisation de la polymérisation est assurée après le remplissage. Plus précisément, il est avantageusement possible, grâce à l'invention, d'assurer l'initialisation de la polymérisation immédiatement après le remplissage, c'est-à-dire en pratique dans un délai inférieur à 5 s, au bénéfice de la productivité, et, la matière à mouler restant homogène lors du remplissage, les lentilles optiques obtenues sont avantageusement dépourvues de défaut optique susceptible de conduire à leur rebut, au bénéfice du coût global.

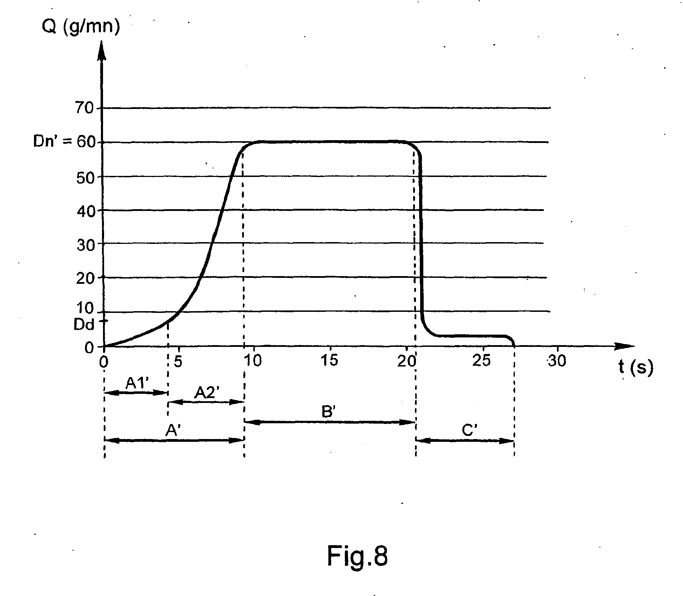

A la figure 8, on a représenté un autre exemple de séquence de remplissage du moule, conforme au procédé selon l'invention. Cette séquence comporte comme celle de la figure 7 trois étapes principales : une étape de montée en débit A', une étape de remplissage plein débit B' et une étape de descente en débit C'. L'étape de remplissage plein débit B' et l'étape de descente en débit C' sont similaires respectivement aux étapes B et C précédemment décrites en référence à la figure 7 : l'étape B' est à débit constant et l'étape C' se divise en trois phases.

L'exemple de la figure 8 se distingue de celui de la figure 7 en ce que l'étape de montée en débit A' se divise seulement en deux phases et ne présente pas de palier.

Au cours de l'étape de montée en débit A', le débit de matière entrant dans la cavité de moulage passe globalement de zéro au débit nominal Dn qui est ici le même que celui de l'exemple de la figure 7. Comme cela est visible sur la figure 8, le débit est une fonction du temps qui est monotone strictement croissante, continue au second ordre. On peut distinguer deux sous-phases : une phase de début de remplissage bas débit A1' et une phase de montée principale en débit A2'.

On débute par la phase de début de remplissage bas débit notée A1' à la figure 8 au cours de laquelle le débit est une fonction strictement croissante du temps et passe de sa valeur initiale nulle au débit de début de remplissage Dd'.

Pour obtenir cette première montée en débit, on procède en pratique à une ouverture partielle et lente de la vanne. Le pointeau 40 est tiré progressivement par la tige 51 du vérin 50 à partir de sa position initiale de fermeture.

Le débit étant croissant, le débit de début de remplissage Dd' est atteint à la fin de phase A1' et il est ici de 8 g/min.

Comme précédemment, la phase de début de remplissage bas débit A1' dure jusqu'à ce que la cavité de moulage du moule soit remplie à une hauteur prédéterminée, mesurée entre le point le plus profond de la cavité de moulage et la surface libre de la matière à mouler au droit de ce point. Dans le cas d'espèce présenté figure 7 une hauteur de 3 mm a été retenue.

Lorsque cette hauteur est atteinte, on procède à la montée principale en débit, notée A2' à la figure 8. Le débit passe du débit de début de remplissage Dd' au débit nominal Dn'. Dans l'exemple donné à la figure 7, le débit nominal Dn' est de 60 g/min. La durée de cette montée principale en débit est de 5 s environ.

Pour le détail de la loi de variation du débit en fonction du temps Q(t), il est renvoyé à la figure 8. On notera en particulier la continuité au second ordre de cette fonction entre les différentes phases A1', A2', B', C'.

En pratique, au cours de cette phase, le pointeau 40 est tiré par la tige 51 du vérin 50 jusqu'à sa position d'ouverture maximum. La section d'ouverture, et donc le débit, varient tout au long de cette phase suivant une loi définie par la variation de position linéaire du pointeau en relation avec la forme du profil du nez 42 du pointeau 40.

## Revendications

1. Procédé de moulage d'un élément optique en une matière organique, comportant une étape de remplissage d'une cavité de moulage (6) appropriée avec de la matière organique à l'état liquide, ladite étape de remplissage comportant les étapes suivantes :
- montée en débit (A), pour passer d'un débit nul à un débit nominal (Dn) supérieur à 40 g/min,
- remplissage plein débit (B), avec maintien du débit nominal (Dn),
- descente en débit (C), pour revenir du débit nominal (On) au débit nul, tel que l'étape de montée en débit (A) se décompose en au moins deux phases :
- début de remplissage (A1 ; A1') à bas débit, le débit étant au cours de cette phase croissant pour atteindre un maximum, dit débit de début de remplissage (Dd), puis
- montée principale en débit (A2) pour passer du débit de début de remplissage (Dd) au débit nominal (Dn), **caractérisé en ce que** le début de remplissage à bas débit a lieu jusqu'au remplissage du moule à une hauteur de matière d'au moins 2 mm au point le plus profond du moule et ledit débit de début de remplissage (Dd) est inférieur à 20 g/min.

2. Procédé selon la revendication précédente, dans lequel la hauteur de matière marquant la fin de la phase de début de remplissage (A1 ; A1'), est inférieure à 12 mm.

3. Procédé selon l'une des revendications précédentes, dans lequel la hauteur de matière marquant la fin de la phase de début de remplissage (A1 ; A1'), est comprise entre 5 et 10 mm et est de préférence de 7 mm environ.

4. Procédé selon l'une des revendications précédentes, dans lequel le débit de début de remplissage (Dd) est compris entre 3 et 8 g/min.

5. Procédé selon l'une des revendications précédentes, dans lequel le débit nominal (Dn) est compris entre 50 et 300 g/min.

6. Procédé selon l'une des revendications précédentes, dans lequel la phase de début de remplissage (A1) se décompose elle-même en deux phases :
- montée préliminaire en débit (A11) pour passer du débit nul au débit de début de remplissage (Dd),
- palier de début de remplissage bas débit (A12), avec maintien du débit de début de remplissage (Dd).

7. Procédé selon la revendication précédente, dans lequel la phase de palier de début de remplissage bas débit (A12) est maintenue entre 4 et 10 secondes.

8. Procédé selon l'une des revendications 1 à 5, dans lequel, au cours de la phase de début de remplissage (A1'), le débit est une fonction du temps strictement croissante.

9. Procédé selon l'une des revendications précédentes, dans lequel, lors de la phase de montée principale en débit (A2), la vitesse de montée en débit est comprise entre 2000 et 7000 g.min⁻².

10. Procédé selon l'une des revendications précédentes, dans lequel l'étape de descente en débit (C ; C') se décompose en au moins deux phases :
descente principale en débit (C1) pour passer du débit nominal (Dn) à un débit de fin de remplissage (Df) inférieur à 20 g/min,
- fin de remplissage bas débit (C2) à débit décroissant pour passer du débit de fin de remplissage (Df) au débit nul.

11. Procédé selon la revendication précédente, dans lequel le débit de fin de remplissage (Df) est compris entre 3 et 8 g/min.

12. Procédé selon l'une des revendications précédentes, dans lequel la phase de fin de remplissage (C22, 023) se décompose elle-même en deux phases :
- palier de fin de remplissage bas débit (C22) avec maintien du débit de fin de remplissage (Df),
- descente finale en débit (C23) pour passer du débit de fin de remplissage (Df) au débit nul.

13. Procédé selon la revendication précédente, dans lequel la phase de palier de fin de remplissage (C22) est maintenue entre 2 et 8 secondes.

14. Procédé selon l'une des revendications précédentes, comportant en outre une étape de polymérisation de la matière dans ladite cavité de moulage.

15. Procédé selon la revendication précédente, dans lequel la matière est introduite dans la cavité de moulage (6) par un orifice (9) situé en partie basse de ladite cavité.

16. Procédé selon l'une des revendications 14 et 15, dans lequel la polymérisation de la matière est initiée immédiatement après le remplissage complet de la cavité de moulage.

## Claims

1. A method of moulding an organic material optical component, said method including a step of filling an appropriate moulding cavity (6) with organic material in the liquid state, said filling step including the following steps:
- rise in flowrate (A), from a zero flowrate to a nominal flowrate (Dn) greater than 40 g/min,
- full flowrate filling (B), with the nominal flowrate (Dn) maintained, and
- flowrate reduction (C), to return from the nominal flowrate (Dn) to the zero flowrate, such that the rise in flowrate (A) step is divided into at least two phases:
- low flowrate start of filling (A1; A1'), the flowrate increasing during this phase to a maximum start of filling flowrate (Dd), and then
- main rise in flowrate (A2), from the start of filling flowrate (Dd) to the nominal flowrate (Dn) which method is **characterised in that** the start of filling is effected at a low flowrate until the mould is filled to a depth of material of at least 2 mm at the deepest point of the mould and the start of filling flowrate (Dd) is less than 20 g/min.

2. A method according to the preceding claim, wherein the height of the material marking the end of the start of filling phase (A1; A1') is less than 12 mm.

3. A method according to either preceding claim, wherein the height of the material marking the end of the start of filling phase (A1; A1') is from 5 to 10 mm and preferably approximately 7 mm.

4. A method according to any preceding claim, wherein the start of filling flowrate (Dd) is from 3 to 8 g/min.

5. A method according to any preceding claim, wherein the nominal flowrate (Dn) is from 50 to 300 g/min.

6. A method according to any preceding claim, wherein the start of filling phase (A1) is divided into two phases:
- preliminary rise in flowrate (A11), from the zero flowrate to the start of filling flowrate (Dd), and
- low flowrate start of filling plateau (A12), with the start of filling flowrate (Dd) maintained.

7. A method according to the preceding claim, wherein the low flowrate start of filling plateau (A12) is maintained for 4 to 10 seconds.

8. A method according to any of claims 1 to 5, wherein the flowrate during the start of filling phase (A1') is a strictly increasing function of time.

9. A method according to any preceding claim, wherein the rate of rise in flowrate during the main rise in flowrate phase (A2) is from 2 000 to 7 000 g.min⁻².

10. A method according to any preceding claim, wherein the flowrate reduction step (C; C') is divided into at least two phases:
- main flowrate reduction (C1), from the nominal flowrate (Dn) to an end of filling flowrate (Df) of less than 20 g/min, and
- low flowrate end of filling (C2) at decreasing flowrate, from the end of filling flowrate (Df) to the zero flowrate.

11. A method according to the preceding claim, wherein the end of filling flowrate (Df) is from 3 to 8 g/min.

12. A method according to any preceding claim, wherein the end of filling phase (C22, C23) is divided into two phases;
- low flowrate end of filling plateau (C22), with the end of filling flowrate (Df) maintained, and
- final flowrate reduction (C23), from the end of filling flowrate (Df) to the zero flowrate.

13. A method according to the preceding claim, wherein the end of filling plateau phase (C22) is maintained for 2 to 8 seconds.

14. A method according to any preceding claim, further including a step of polymerising the material in said moulding cavity.

15. A method according to the preceding claim, wherein the material is introduced into the moulding cavity (6) through an orifice (9) in the lower portion of said cavity.

16. A method according to either claim 14 or claim 15, wherein polymerisation of the material is initiated immediately after complete filling of the moulding cavity.

## Patentansprüche

1. Verfahren zum Formen eines optischen Elements aus organischem Material, umfassend einen Schritt des Füllens eines geeigneten Formenhohlraums (6) mit dem organischen Material in flüssigem Zustand, wobei der Schritt des Füllens die folgenden Schritte umfasst:
- Steigern des Durchflusses (A), um von einem Durchfluss Null zu einem nominalen Durchfluss (Dn) größer als 40 g/min zu kommen,
- Füllen mit vollem Durchfluss (B), unter Beibehalten des nominalen Durchflusses (Dn),
- Verringern des Durchflusses (C), um von dem nominalen Durchfluss (Dn) zu dem Durchfluss Null zurückzukehren, und der Schritt des Steigerns des Durchflusses (A) gliedert sich in zumindest zwei Phasen:
- Beginn des Füllens (A1; A1') mit geringem Durchfluss, wobei der Durchfluss während dieser Phase um ein Maximum, bezeichnet als Durchfluss des Beginns des Füllens (Dd), zu erreichen, gesteigert wird, dann
- Hauptsteigern des Durchflusses (A2), um von dem Durchfluss des Beginns des Füllens (Dd) zu dem nominalen Durchfluss (Dn) zu kommen, **dadurch gekennzeichnet, dass** der Beginn des Füllens mit geringem Durchfluss so lange erfolgt, bis zur Füllung der Form in einer Höhe des Materials von zumindest 2 mm am tiefsten Punkt der Form und der Durchfluss des Beginns des Füllens (Dd) geringer als 20 g/min ist.

2. Verfahren gemäß dem vorangehenden Anspruch, wobei die Höhe des Materials, welche das Ende der Phase des Beginns des Füllens (A1; A1') markiert, geringer als 12 mm ist.

3. Verfahren gemäß einem der vorangehenden Ansprüche, wobei die Höhe des Materials, welche das Ende der Phase des Beginn des Füllens (A1; A1') markiert, im Bereich von 5 bis 10 mm und vorzugsweise bei ungefähr 7 mm ist.

4. Verfahren gemäß einem der vorangehenden Ansprüche, wobei der Durchfluss des Beginns des Füllens (Dd) im Bereich von 3 bis 8 g/min ist.

5. Verfahren gemäß einem der vorangehenden Ansprüche, wobei der nominale Durchfluss (Dn) im Bereich von 50 bis 300 g/min ist.

6. Verfahren gemäß einem der vorangehenden Ansprüche, wobei die Phase des Beginns des Füllens (A1) sich selbst in zwei Phasen gliedert:
- Einleitendes Steigern des Durchflusses (A11) um von dem Durchfluss Null zu dem Durchfluss des Beginns des Füllens (Dd) zu kommen,
- Stadium des Beginns des Füllens mit geringem Durchfluss (A12), unter Beibehalten des Durchflusses des Beginns des Füllens (Dd).

7. Verfahren gemäß dem vorangehenden Anspruch, wobei das Stadium des Beginns des Füllens mit geringem Durchfluss (A12) zwischen 4 und 10 Sekunden beibehalten wird.

8. Verfahren gemäß einem der Ansprüche 1 bis 5, wobei während der Phase des Beginns des Füllens (A1'), der Durchfluss eine stetig ansteigenden Funktion der Zeit ist.

9. Verfahren gemäß einem der vorangehenden Ansprüche, wobei, bei der Phase des Hauptsteigerns des Durchflusses (A2), die Geschwindigkeit des Steigems des Durchflusses im Bereich von 2000 und 7000 g.min⁻² ist.

10. Verfahren gemäß einem der vorangehenden Ansprüche, wobei der Schritt des Verringerns des Durchflusses (C; C') sich in zumindest zwei Phasen gliedert: Hauptverringern des Durchflusses (C1), um von dem nominalen Durchfluss (Dn) zu einem Durchfluss des Endes des Füllens (Df) von weniger als 20 g/min zu kommen,
- Ende des Füllens mit geringem Durchfluss (C2) mit einem sich verringerndem Durchfluss, um von dem Durchfluss des Endes des Füllens (Df) zum Durchfluss Null zu kommen.

11. Verfahren gemäß dem vorangehenden Anspruch, wobei der Durchfluss des Endes des Füllens (Df) im Bereich von 3 bis 8 g/min ist.

12. Verfahren gemäß einem der vorangehenden Ansprüche, wobei die Phase des Endes des Füllens (C22, C23) sich selbst in zwei Phasen gliedert:
- Stadium des Endes des Füllens mit geringem Durchfluss (C22), unter Beibehalten des Durchflusses des Endes des Füllens (Df),
- Abschließendes Verringern des Durchflusses (C23) um von dem Durchfluss des Endes des Füllens (Df) zu dem Durchfluss Null zu kommen.

13. Verfahren gemäß dem vorangehenden Anspruch, wobei das Stadium des Endes des Füllens mit geringem Durchfluss (C22) zwischen 2 und 8 Sekunden beibehalten wird.

14. Verfahren gemäß einem der vorangehenden Ansprüche, zudem umfassend einen Schritt der Polymerisation des Materials in dem Formenhohlraum.

15. Verfahren gemäß dem vorangehenden Anspruch, wobei das Material durch eine Öffnung (9), angeordnet im unteren Abschnitt des Hohlraums, in den Formenhohlraum eingebracht wird.

16. Verfahren gemäß einem der Ansprüche 14 oder 15, wobei die Polymerisation des Materials direkt nach dem vollständigen Füllen des Formenhohlraums initiiert wird.
